# EUROPÄISCHE PATENTSCHRIFT

(11) **EP 0 466 163 B1**
(45) Veröffentlichungstag und Bekanntmachung des Hinweises auf die Patenterteilung: **21.09.1994**
(21) Anmeldenummer: 91111595.4
(22) Anmeldetag: 12.07.1991
(51) Int. Cl.: E04C 2/20, B32B 5/28

(54) **Halbzeug, nämlich Bauplatte oder Bauprofil aus Kunststoff-Hartschaumplatten**
Semi-finished product, in particular building board or constructional trim made of rigid foamed plastic
Produit semi-fini, en particulier dalle de construction ou profilé de construction en mousse synthétique dure

(30) Priorität: 13.07.1990 DE 9010579 U
(43) Veröffentlichungstag der Anmeldung: 15.01.1992
(73) Patentinhaber: Wedi, Helmut, D-48282 Emsdetten (DE)
(72) Erfinder: Wedi, Helmut, D-48282 Emsdetten (DE)
(74) Vertreter: Hoffmeister, Helmut, Dr. Dipl.-Phys.

(56) Entgegenhaltungen:
- DE-A- 1 909 071
- DE-A- 1 951 310
- DE-A- 2 559 313
- DE-B- 1 194 308
- FR-A- 2 588 587
- FR-A- 2 591 147
- GB-A- 2 198 989

## Beschreibung

Die Erfindung betrifft ein Halbzeug, nämlich Bauplatte oder Bauprofil, bestehend aus
- wenigstens zwei Platten aus Kunststoff-Hartschaum und
- einer dazwischenliegenden Schicht, mit der die Platten verbunden sind.

Aus der DE-A-2 559 313 ist eine Mehrschicht-Fassadenplatte bekannt, die aus einer Hartschaum-Trägerplatte mit einer Deckschicht und Versteifungselementen besteht. Durch eine andersartige Orientierung der Biegefestigkeit in Längs- gegenüber der Querrichtung kommt es zu einem unterschiedlichen Biegeverhalten der Hartschaum-Platten. Um die Fassadenplatten zu verstärken, wird eine Hartschaum-Verstärkerplatte im Abstand zur Deckschicht angeordnet, deren Biegeelastizität quer zu derjenigen der Hartschaum-Trägerplatte orientiert ist. Zwischen beiden Platten wird als zusätzliches Verstärkungselement ein netzartiges Gebilde eingelegt. Das Verstärkungsnetz wird dann beidseitig an den Platten verklebt.

Nachteilig ist, daß das Zusammenkleben der Platten einen definierten gleichmäßigen Außendruck erfordert, damit das Versteifungsnetz in die elastischen Platten eingedrückt wird. Bleibt dieser Außendruck aus, kleben nur einzelne Fäden des Netzes an den Innenseiten der Platten, so daß es mit der unzureichenden Verbindung zu keiner Versteifung kommen kann.

In der GB-A-2 198 989 ist eine Türfüllung angegeben, die aus zwei Außenabschnitten besteht. Innen wird der eine Außenabschnitt mit einer Blechverkleidung und der andere mit einem Isolierschaumstoff belegt. Zwischen dem Blech und dem Isolierschaumstoff ist sandwichartig ein Drahtnetz angeordnet. Das Drahtnetz trägt dabei allerdings nur zur Stabilisierung der Türfüllung bei. Eine bindende Funktion übernimmt es nicht.

Weiterhin sind Bauplatten aus Kunststoff-Hartschaum bekannt, die aus einem Polystyrol- oder Polyurethan-Hartschaum mit außenliegenden Schichten aus Kunststoffmörtel und Glasfaserfilament-Armierung bestehen. Diese Bauplatten sind auf vielen Anwendungsgebieten im Einsatz und haben sich im großen und ganzen bewährt. Nachteil der Platten ist, daß sie im Inneren relativ weich sind und daher als vorkragende Erkerträger oder tragende Platten nicht gut verwendbar sind. Ein weiterer Nachteil ist, daß mit derzeitig bekannten Schäummaschinen die Breite der Platten auf ca. 1,20 m begrenzt ist.

Es stellt sich die Aufgabe, ein Halbzeug, nämlich eine Bauplatte aus Kunststoff-Hartschaumplatten mit einer dazwischenliegenden Verbundschicht zu schaffen, die eine hohe Querstabilität und Verwindungssteifigkeit besitzt und gleichzeitig die Möglichkeit bildet, die Breite der Platten durch modulartige Verwendung von Plattenelementen begrenzter Breite zu vergrößern.

Diese Aufgabe wird erfindungsgemäß dadurch gelöst,
- daß die dazwischenliegende Schicht aus einem Armierungsgewebe und einem aushärtbaren Kunststoffmörtel besteht und
- daß der Kunststoff-Mörtel nach dem Aushärten mit dem Armierungsgewebe eine Zwischenschicht und quer zu wenigstens einer der Zwischenschichten liegende Verankerungselemente ausbildet,
so daß die Platten versteift und aufeinander- und/oder nebeneinanderliegend zusammengefügt sind.

Die vorgenannten Zwischenschichten, die quer und/oder längs zur Plattenoberfläche verlaufen können, bestehen vorzugsweise aus demselben Kunststoffmörtel und Armierungsgewebe, wie sie bereits für die außenseitigen Beschichtungen von Kunststoff-Hartschaumplatten bekannt sind. Demnach handelt es sich bei dem Kunststoffmörtel um an sich bekannte, kunstharzvergütete, hydraulisch abbindende Klebemörtel, die nach dem Aushärten weitgehend wasserfest sowie witterungs-, alterungs- und frostbeständig sind. Derartige Kunststoffe werden beispielsweise unter dem Warenzeichen HYDROLAN vertrieben. Die einzusetzenden Kunststoffmörtel sind daher an sich bekannt und entsprechen denen der bei bekannten Hartschaumplatten verwendeten Art. Unter Hartschaumstoffen wird nach DIN 7726, Blatt 1 (Dezember 1966) ein harter Schaumstoff verstanden, der bei relativ hohem Verformungswiderstand geringe elastische Verformbarkeit zeigt. Verwendbar erscheinen sowohl zähharte als als sprödharte Schaumstoffe. Als Ausgangsstoffe für die Herstellung von Hartschaumstoffen sind bekannt: Polymethacrylimid, Phenol-Formaldehyharze,Harnstoffharze, PVC, Polystyrol, Phenolharz und Polyurethane. Einige Hartschaumstoffe sind auch als leicht-, andere als schwer-entflammbar einzustufen, worauf bei der Verarbeitung geachtet werden muß.

Es ist besonders vorteilhaft, daß sich ein derartiges Halbzeug aus den Schnitt-Abfällen der vorgenannten, bekannten armierten Hartschaumplatten zusammensetzen läßt. Hierzu wird einfach die bereits ausgehärtete Außenschicht noch einmal mit einer dünnen Schicht von noch nicht ausgehärtetem Mörtel derselben Art bestrichen und das Halbzeug aus den einzelnen Platten geschichtet. Demnach können auch die Außenseiten des Halbzeugs eine derartige versteifende Schicht tragen. Es kann jedoch auch "naß in naß" agearbeitet werden, d.h., bereits bei der Beschichtung und Armierung eine Zusammensetzung der Teile und Plattenmodulen erfolgen.

Als Armierungsgewebe eignet sich vorzugsweise Glasfilament-Gewebe. Auch hier kann jedoch auf weitere Angebote des Marktes zurückgegriffen werden. Es kann beispielsweise Acrylfasergewebe, Glasfaservlies, Glasseidengewebe oder ähnliches, als Armierungsgewebe bekanntes Gespinst oder Gewebe verwendet werden; auch eignen sich in vielen Fällen metallische Gewebe, Gewebe aus Kohle- oder Aramidfasern und dergleichen.

Bei dem vorgenannten Schichtaufbau ergibt sich der Vorteil, daß Beschläge, z.B. Träger und dergleichen, in die Zwischenschichten eingebettet und dort verklebt werden. Hierdurch wird der relativ weiche Schichtaufbau außerhalb der armierten Zwischenschichten nicht in Anspruch genommen, sondern das Halbzeug dort beansprucht, wo es die größte Steifigkeit hat.

Unter "Bauplatten" oder "Bauprofilen" werden im Querschnitt verschiedene flache, polygonale oder runde Profile verstanden, die beispielsweise als Bauplatten, Fassadenplatten, Konsolen, Stützerker, Aufsetzerker oder dergleichen im Naßzellenbau verwendet werden können, aber auch für den Innenausbau, für Messestände, Fahrzeugaufbauten und dergleichen.

Die Verankerungselemente, die quer zu wenigstens einer der Zwischenschichten eingelassen sind, sind ein weiteres Verstärkungsmittel. Hierzu eignen sich insbesondere mit ausgehärtetem Bindemittel ausgegossene Bohrungen, die wenigstens zwei aufeinanderliegende Platten durchdringen.

Um eine flächenhaft größere Ausdehnung zu erreichen, kann die Bauplatte auch aus mehreren, nebeneinanderliegenden Plattenmodulen schichtweise übereinandergesetzt und überlappend gebildet werden. Hierzu empfiehlt es sich, daß an wenigstens einer Schmalseite Verbindungselemente, wie Nut/Feder, Stufenfälze oder dergleichen, zur Verbindung mit kompatibel ausgestatteten Bauplatten gleicher Art vorhanden sind. Dadurch kann auch in wenigstens einer Schicht aus nebeneinanderliegenden Plattenelementen aufgebaut werden. Die Zusammensetzung der Platten ist nicht nur auf eine fabrikmäßige Herstellung beschränkt, sondern kann auch aus Plattenmodulen direkt an der Baustelle erfolgen.

Zur Überbrückung des Stoßes nebeneinanderliegender Plattenelemente werden den Stoß überbrückende Schichten aus Kunststoffmörtel mit Armierungsgewebe verwendet; es können jedoch auch Klammern oder Verbindungsstücke vorgesehen werden. Armierungsgewebe, Klammern, Verbindungsstükke und ähnliche Teile können auch in den vorgesehenen Bereichen bereits mit eingeschäumt werden. Dabei ist auch möglich, die Klammern und dergleichen überstehen zu lassen, so daß sie bei einer Verbindung direkt einsetzbar sind.

Ausführungsbeispiele der Erfindung sind in der Zeichnung dargestellt. Dabei zeigen die Figuren im einzelnen :
- Fig. 1: eine erste Ausführungsform in Form eines Bauprofils;
- Fig. 2 und 3: eine zweite und dritte Ausführungsform in Form einer Bauplatte.

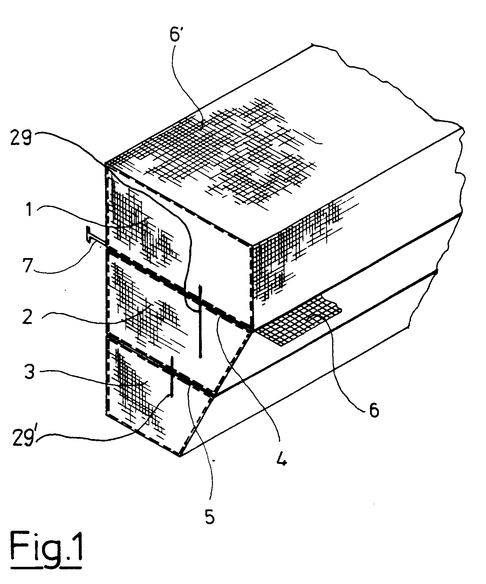

Das in **Figur 1** dargestellte Bauprofil hat eine etwa trapezförmige Querschnittsform und besteht aus drei Kunststoff-Hartschaumschichten 1, 2, 3. Die Hartschaumschichten können verschiedene Härten, Dicken, Konsistenzen, spezifische Dichten und dergleichen haben. Es wird hier auf die Beschreibungseinleitung verwiesen. Dies hängt davon ab, für welchen Einsatz das Material gedacht ist oder welche Hartschaum-Teile zur Verfügung stehen. An den Schichtgrenzen ist das Bauprofil gemäß Figur 1 mit einer Zwischenschicht 4, 5 aus einem Kunststoffmörtel und einem Armierungsgewebe 6 versehen. Das Armierungsgewebe 6 ist an der Seite etwas herausgezogen, so daß es möglich ist, auch Überlappungen mit dem Armierungsgewebe am Stoß zwischen zwei Profilen vorzunehmen. Hierdurch wird eine ausgezeichnete Verbindung in horizontaler Erstreckung hergestellt. Dasselbe Armierungsgewebe 6' befindet sich an der Oberseite des Profiles, wo es in eine entsprechende Kunststoffmörtelschicht eingebettet ist.

Weiterhin sind quer zu der Zwischenschicht 4 bzw. 5 ein Verankerungselement 29 bzw. 29' eingelassen und ein Beschlag 7 in die Zwischenschicht 4 eingebettet. Es hat sich gezeigt, daß ein solcher Beschlag 7, der normalerweise in einem mittleren Bereich einer Kunststoffhartschaumplatte nicht gut gehalten wird, in der Mörtelzwischenschicht 4 eine ausgezeichnete Befestigung erfährt, d.h. einen großen Ausziehwert und eine hohe Spannung aufnehmen kann.

Insgesamt eignet sich das vorbeschriebene Halbzeug für vielerlei Anwendungszwecke im Naßzellenbereich, im Außenbereich und in anderen Bereichen, wo mit Feuchtigkeit zu rechnen ist und wo das Material später mit Fliesen und dergleichen beschichtet wird.

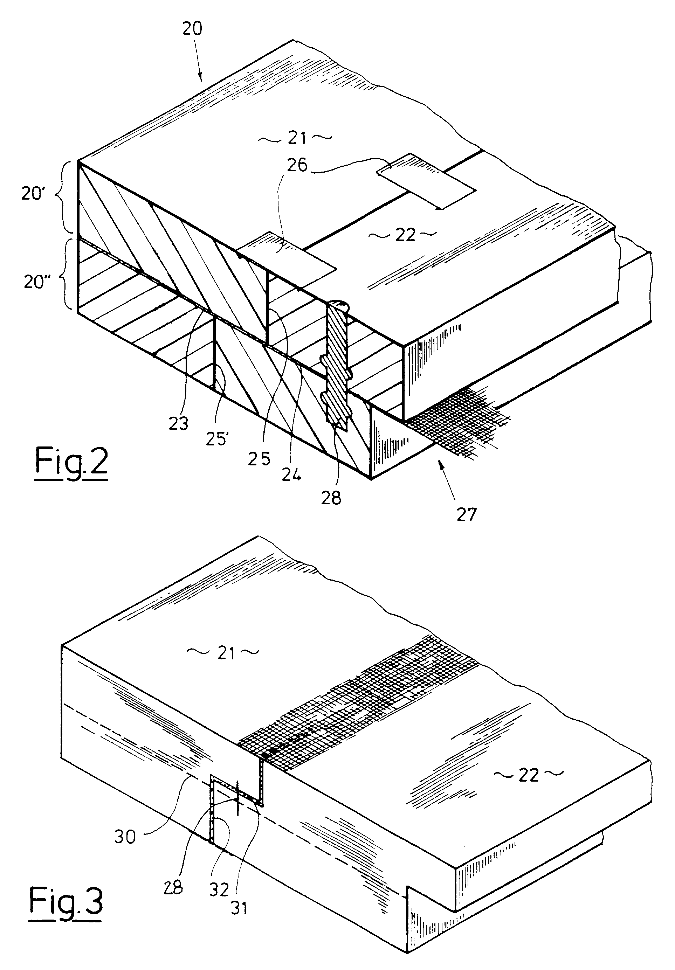

**Figur 2** zeigt eine Ausführungsform einer Bauplatte 20, die entsprechend der Erfindung hergestellt ist. Die Bauplatte 20 besteht aus zwei Schichten 20', 20'', die durch eine Zwischenschicht 24 verbunden sind. Die Zwischenschicht besteht, wie bereits aus dem Ausführungsbeispiel gemäß Figur 1 bekannt, aus einem Kunststoffmörtel mit einer Armierung, die im vorliegenden Falle aus Glasfaservlies 23 besteht. Die Bauplatte 20 ist in der oberen und unteren Schicht aus nebeneinanderliegenden Plattenelementen 21, 22 aufgebaut, die im Bereich des Stoßes 25 verklebt sind, wobei der Stoß 25 zusätzlich noch mit Klammern 26 überbrückt ist. Die Klammern 26 können zusätzlich noch verklebt sein.

Wie erkennbar, sind weiterhin bei der horizontalen Schichtung versetzte Stöße 25, 25' vorgesehen, wobei der hier vorgesehene Stufenfalz vom Armierungsgewebe überbrückt ist. Ein solcher Stufenfalz kann auch im Randbereich (bei 27) vorgesehen sein, so daß eine kompatible Anlage an eine entsprechende Platte möglich ist.

Weiterhin sind quer zu der Zwischenschicht 24 Verankerungselemente eingelassen, die im vorliegenden Falle aus mit ausgehärtetem Bindemittel ausgegossenen Bohrungen 28 bestehen, so daß sowohl die Verwindungssteifigkeit als auch die Festigkeit der Bauplatte 20 noch erhöht werden.

Insgesamt ergibt sich damit ein sehr fester und in sich steifer Bauplatten-Aufbau, in den verschiedene zusätzliche Teile, wie Verankerungen, Beschläge und dergleichen eingebaut werden können. Beispielsweise können auch die ausgefüllten Bohrungen 28 dazu verwendet werden, vorkragende Teile, wie Haken oder Manschettenträger, aufzunehmen und mit der Platte zu verbinden.

Es sei darauf hingewiesen daß die Zwischenschichten 24 nicht in allen Fällen den gesamten tangierenden Bereich zweier aufeinanderliegender Platten ausfüllen müssen, sondern daß auch nur auf einem ausreichenden Teil der Fläche eine solche Zwischenschicht vorgesehen werden muß. Dabei kann auch so verfahren werden, daß der gesamte Berührungsbereich mit Kunststoffmörtel ausgefüllt, aber nur ein Teil mit Armierungsgewebe abgedeckt ist. Dabei wird im allgemeinen großer Wert auf Wasserdichtigkeit in jede Richtung gelegt.

**Figur 3** zeigt eine Bauplatte, bei der keine Schichtung vorgenommen wurde, sondern zwei Plattenmoduln 21, 22 im Bereich eines Stufenfalzes 31 aneinandergesetzt sind. Die Fläche des Stufenfalzes ist mit Kunststoffmörtel der vorgenannten Art ausgefüllt. Ein Armierungsgewebe 30 ist bereits im Ausschäumverfahren mit eingebracht worden. Anstelle des Stufenfalzes 31 können auch andere Verbindungen, beispielsweise Nut-Feder-Verbindungen, Gehrungen und dergleichen vorgesehen werden. Außenseitig ist der Stoß'32 mit einem Armierungsgewebe belegt und mit Kunststoffmörtel bündig überdeckt und damit ein Verankerungselement 28 eingelassen. Die einzelnen Plattenmoduln haben beispielsweise eine Stärke von ab 6 mm und eine Breite von beispielsweise von 0,80 - 1,50 m. Es können demnach auch 2, 3 oder mehr Platten nebeneinander gelegt werden, wobei wesentlich ist, daß eine Austeifung durch Armierungsgewebe und ein Verkleben und Bündigmachen durch Kunststoffmörtel erfolgt.

## Patentansprüche

1. Halbzeug, nämlich Bauplatte (20) oder Bauprofil, bestehend aus
- wenigstens zwei Platten (1, 2, 3, 20', 20'', 21, 22) aus Kunststoff-Hartschaum und
- einer dazwischenliegenden Schicht (6, 6', 23, 30), mit der die Platten (1, 2, 3, 20', 20'', 21, 22) verbunden sind,
dadurch gekennzeichnet,
- daß die dazwischenliegende Schicht aus einem Armierungsgewebe (6, 6', 23, 30) und einem aushärtbaren Kunststoffmörtel besteht und
- daß der Kunststoff-Mörtel nach dem Aushärten mit dem Armierungsgewebe (6, 6', 23, 30) eine Zwischenschicht (4, 5, 24, 25, 25', 32) und quer zu wenigstens einer der Zwischenschichten (4, 5; 24; 25, 25'; 32) liegende Verankerungselemente (28, 28'; 29, 29') ausbildet,
so daß die Platten (1, 2, 3, 20', 20'', 21, 22) versteift und aufeinander- und/oder nebeneinanderliegend zusammengefügt sind.

2. Halbzeug nach Anspruch 1, dadurch gekennzeichnet, daß das Armierungsgewebe (6, 6', 23, 30) auf wenigstens einer der Außenseiten der Platten (1, 2, 3, 20', 20'', 21, 22) mit Kunststoffmörtel befestigt oder eingeschäumt ist.

3. Halbzeug nach Anspruch 1 oder 2, dadurch gekennzeichnet, daß das Armierungsgewebe (6, 6', 23, 30) ein Glasfilament-Gewebe oder Metallgewebe ist.

4. Halbzeug nach Anspruch 1 bis 3, dadurch gekennzeichnet, daß die Zwischenschicht bei einer Verbindung an einem Stoß (25, 25', 32) nebeneinanderliegender Platten (21, 22) eines Stufenfalzes (31), einer Gehrung, einer Nut-Feder-Verbindung oder dergleichen angeordnet ist.

5. Halbzeug nach Anspruch 4, dadurch gekennzeichnet, daß der Stoß (25, 25') nebeneinanderliegender Plattenelemente (21, 22) durch überbrückende Schichten aus Kunststoffmörtel und Armierungsgewebe außen- und/oder innenseitig überlappt ist.

6. Halbzeug nach Anspruch 1, dadurch gekennzeichnet, daß das Verankerungselement durch eine Bohrung (28), die wenigstens zwei aufeinanderliegende Platten (20', 20'') durchdringt, die mit Kunststoffmörtel ausgegossen ist, verwirklicht ist.

7. Halbzeug nach wenigstens einem der Ansprüche 1 bis 6, dadurch gekennzeichnet, daß in der oberen und unteren Schicht nebeneinanderliegender Platten (21, 22) der Bereich des Stoßes (25, 25') zusätzlich mit Klammern (26) oder Verbindungsstücken überbrückt ist.

8. Halbzeug nach wenigstens einem der Ansprüche 1 bis 7, dadurch gekennzeichnet, daß in die Bohrungen (28) zusätzlich vorkragende Teile, wie Haken oder Manschettenträger einbringbar sind.

9. Halbzeug nach wenigstens einem der Ansprüche 1 bis 8, dadurch gekennzeichnet, daß in die Zwischen schicht (4) ein Beschlag (7) eingebettet ist.

10. Halbzeug nach wenigstens einem der Ansprüche 1 bis 9, dadurch gekennzeichnet, daß die Zwischenschicht (24) im gesamten Berührungsbereich zweier aufeinanderliegender Platten (20', 20'') mit Kunststoffmörtel vollständig ausgefüllt und nur teilweise mit Armierungsgewebe (23) abgedeckt ist.

## Claims

1. A semiproduct, namely a building panel (20) or a building profile consisting of
- at least two panels (1, 2, 3, 20', 20'', 21, 22) of rigid foam plastic and
- an intermediate layer (6, 6', 23, 30) by which the panels (1, 2, 3, 20', 20'', 21, 22) are connected
characterised in that
- the intermediate layer consists of a reinforcing fabric (6, 6', 23, 30) and a curable plastic mortar and
- in that after curing the plastic mortar forms with the reinforcing fabric (6, 6', 23, 30) an intermediate layer (4, 5, 24, 25, 25', 32) and anchoring elements (28, 28'; 29, 29') situated transversely of at least one of the intermediate layers (4, 5; 24; 25, 25'; 32),
so that the panels (1, 2, 3, 20', 20'', 21, 22) are stiffened and joined together in superposed and/or side-by-side relationship.

2. A semiproduct according to claim 1, characterised in that the reinforcing fabric (6, 6', 23, 30) is fixed with plastic mortar or foamed in on at least one of the outsides of the panels (1, 2, 3, 20', 20'', 21, 22).

3. A semiproduct according to claim 1 or 2, characterised in that the reinforcing fabric (6, 6', 23, 30) is a glass filament fabric or metal fabric.

4. A semiproduct according to claims 1 to 3, characterised in that in the case of a connection the intermediate layer is disposed at a connection at a joint (25, 25', 32) of adjacent panels (21, 22) of a step seam (31), a mitre joint, a tongue-and-groove connection or the like.

5. A semiproduct according to claim 4, characterised in that the joint (25, 25') between adjacent panel elements (21, 22) is overlapped on the outside and/or inside by bridging layers of plastic mortar and reinforcing fabric.

6. A semiproduct according to claim 1, characterised in that the anchoring element is embodied by a bore (28) which passes through at least two superposed panels (20', 20'') and which is filled with plastic mortar.

7. A semiproduct according to at least any one of claims 1 to 6, characterised in that the region of the joint (25, 25') is additionally bridged by clips (26) or connectors in the top and bottom layer of adjacent panels (21, 22).

8. A semiproduct according to at least any one of claims 1 to 7, characterised in that projecting parts, such as hooks or gasket carriers, can additionally be introduced into the bores (28).

9. A semiproduct according to at least any one of claims 1 to 8, characterised in that a fitting (7) is embedded in the intermediate layer (4).

10. A semiproduct according to at least any one of claims 1 to 9, characterised in that the intermediate layer is fully filled with plastic mortar and only partially covered with reinforcing fabric (23) in the entire contact zone of two superposed panels (20', 20'').

## Revendications

1. Produit semi-fini, notamment dalle de construction (20) ou profilé de construction, composé
- d'au moins deux plaques (1, 2, 3, 20', 20'', 21, 22) en mousse synthétique dure et
- d'une couche intermédiaire (6, 6', 23, 30) qui relie les plaques (1, 2, 3, 20', 20'', 21, 22),
**caractérisé** par le fait que
- la couche intermédiaire est constituée d'un tissu d'armature (6, 6', 23, 30) et d'un mortier synthétique durcissable et
- que le mortier synthétique forme après durcissement avec le tissu d'armature (6, 6', 23, 30) une couche intermédiaire (4, 5, 24, 25, 25', 32) et des éléments d'ancrage (28, 28' ; 29, 29') situés transversalement à au moins l'une des couches intermédiaires (4, 5 ; 24 ; 25, 25' ; 32),
si bien que les plaques (1, 2, 3, 20', 20'', 21, 22) sont renforcées et assemblées les unes sur les autres et/ou les unes à côté des autres.

2. Produit semi-fini selon la revendication 1, **caractérisé** par le fait que le tissu d'armature (6, 6', 23, 30) est fixé avec du mortier synthétique ou est enrobé dans la mousse sur au moins l'un des côtés extérieurs des plaques (1, 2, 3, 20', 20'', 21, 22).

3. Produit semi-fini selon la revendication 1 ou 2, **caractérisé** par le fait que le tissu d'armature (6, 6', 23, 30) est un tissu en filaments de verre ou un tissu métallique.

4. Produit semi-fini selon les revendications 1 à 3, **caractérisé** par le fait que la couche intermédiaire est disposée dans le cas d'un assemblage au niveau d'un joint (25, 25', 32) de plaques (21, 22) disposées côte à côte au moyen d'un gradin (31), d'un onglet, par une rainure et une languette ou analogue.

5. Produit semi-fini selon la revendication 4, **caractérisé** par le fait que le joint (25, 25') entre des éléments de plaque (21, 22) disposés côte à côte est chevauché extérieurement et/ou intérieurement par des couches en mortier synthétique et un tissu d'armature.

6. Produit semi-fini selon la revendication 1, **caractérisé** par le fait que l'élément d'ancrage est réalisé par un perçage (28) qui traverse au moins deux plaques (20', 20'') superposées et est rempli de mortier synthétique.

7. Produit fini selon au moins l'une des revendications 1 à 6, **caractérisé** par le fait que dans la couche supérieure et inférieure de plaques (21, 22) disposées côte à côte, la zone du joint (25, 25') est de plus recouverte par des clameaux (26) ou des éléments d'assemblage.

8. Produit fini selon au moins l'une des revendications 1 à 7, **caractérisé** par le fait que des pièces saillantes, comme des crochets ou des supports de manchettes, peuvent être insérées en plus dans les perçages (28).

9. Produit semi-fini selon au moins l'une des revendications 1 à 8, **caractérisé** par le fait qu'une ferrure (7) est enrobée dans la couche intermédiaire (4).

10. Produit semi-fini selon au moins l'une des revendications 1 à 9, **caractérisé** par le fait que la couche intermédiaire (24) est remplie intégralement de mortier synthétique dans toute la zone de contact de deux plaques (20', 20'') superposées et n'est que partiellement recouverte d'un tissu d'armature (23).
